# EUROPÄISCHE PATENTANMELDUNG

(11) **EP 1 574 732 A1**
(43) Veröffentlichungstag der Anmeldung: **14.09.2005**
(21) Anmeldenummer: 05005152.3
(22) Anmeldetag: 09.03.2005
(51) Int. Cl.: F16D 1/09

(54) **Spannvorrichtung zum lösbaren Festspannen einer zylindrischen Nabe auf einer zylindrischen Welle**

(30) Priorität: 10.03.2004 DE 102004011679
(71) Anmelder: EPPENDORF AG, 22331 Hamburg (DE)
(72) Erfinder: Zingeler, Roland, 04177 Leipzig (DE)
(74) Vertreter: UEXKÜLL & STOLBERG

(57) **Zusammenfassung**

Die Erfindung betrifft eine Spannvorrichtung zum lösbaren Festpannen einer zylindrischen Nabe auf einer zylindrischen Welle, insbesondere eines Zentrifugenrotors auf einer zylindrischen Welle, mit zwei schraubenfederförmig gewundenen Spannelementen (2, 4), wobei die Windungen eines Spannelements im Querschnitt durch eine die Schraubenlängsachse enthaltende Ebene mit Bezug auf die Schraubengangrichtung auf einer Seite mit einer keilförmigen (3) Abschrägung versehen sind und die Windungen des anderen Spannelements im genannten Querschnitt mit Bezug auf die Schraubengangrichtung auf der anderen Seite mit einer komplementären Abschrägung (5), die der Abschrägung (3) des ersten Spannelements (2) zugewandt ist, versehen sind, so dass sich die Abschrägungen (3, 5) bei Einwirkung einer zusammendrückenden Kraft auf die Spannelemente aufeinander schieben, um eine radial nach innen und außen gerichtete Ausdehnung der Spannelemente (2, 4) zum reibungskraftschlüssigen Festspannen der Welle in der Nabe zu bewirken.

## Beschreibung

Die vorliegende Erfindung betrifft eine Spannvorrichtung zum lösbaren Festspannen einer zylindrischen Nabe auf einer zylindrischen Welle, insbesondere eines Zentrifugenrotors auf einer zylindrischen Welle.

Bisher wurden zur lösbaren Befestigung eines Zentrifugenrotors auf einer zylindrischen Welle z.B. konische Aufnahmen und konische Wellenendstücke verwendet, bei denen aber ein Festsetzen oder "Verkleben" des Zentrifugenrotors auf der Welle auftreten kann. Die bisher bekannten zylindrischen Aufnahmen oder Naben für Zentrifugenrotoren erfordern einen Mitnehmerstift, der radial durch die Welle gesteckt wird, und die Welle in diesem Bereich schwächt.

Allgemein sind als Klemmverbindungen von Naben auf Wellen sogenannte Spannhülsen bekannt. Diese bestehen aus zwei ringförmigen Teilen, die im Querschnitt senkrecht zur Ringebene eine keilförmig abgeschrägte Form haben, wobei ein Ringteil eine Abschrägung nach außen und das andere eine komplementäre Abschrägung nach innen hat, so dass die Ringteile, wenn die Abschrägungen aufeinander zugewandt sind, ineinander geschoben werden können. Beim Ausüben einer axialen Kraft auf die Spannhülse werden die beiden Ringteile ineinander geschoben, wobei durch die komplementären Abschrägungen eine Klemmwirkung und eine radial nach innen und außen gerichtete Kraft zum reibungskraftschlüssigen Festspannen der Wellen der Nabe erzeugt wird. Bei diesen Spannhülsen ist es für eine dauerhafte Festspannung erwünscht, dass sich die Hülsenteile beim Aufeinanderschieben auch plastisch verformen, um eine sichere Festspannung zu erzielen. Daher werden für diese Spannhülsen weiche Metalllegierungen verwendet. Diese WellenNaben-Verbindung ist aber in verschiedener Hinsicht nachteilig. Zum einen ist sie nicht ohne weiteres wieder lösbar. Weiterhin konzentriert sich die Klemmverbindung auf den in axialer Richtung relativ kurzen Bereich einer Spannhülse, denn bei einer hypothetischen Anordnung von mehreren Spannhülsen in axialem Abstand zueinander ist es nicht möglich, durch eine von außen einwirkende komprimierende Kraft auf die hintereinanderliegenden Spannhülsen diese sämtlich zum Aufeinanderschieben und Festspannen zu bringen, so dass die inneren Spannhülsen dann locker bleiben und nicht zum Festspannen beitragen. Daher ist die Festspannungswirkung solcher Spannhülsen relativ gering.

Aus DE 34 11 230 A1 ist eine aus zwei über eine Gewinde verbundene Hülsen bestehende Spannhülse bekannt. Das Gewinde ist im Querschnitt sägezahnförmig mit einem flachen Anstiegswinkel der ansteigenden Sägezahnflanke. Die Spannwirkung wird durch gegenseitiges axiales Schieben beider Hülsen durch Verschieben der geneigten Flanken des Gewindes zueinander erzielt.

US 4,514,109 A beschreibt eine Spannvorrichtung für eine Hülse auf einer Nabe, wobei in dem Zwischenraum zwischen Nabe und Hülse, koaxial zu diesen eine Schraubenfeder angeordnet ist. Es sind ferner Mittel zum axialen Komprimieren der Schraubenfeder vorgesehen. Die axiale Kompression der Schraubenfeder bewirkt, dass benachbarte Windungen aneinander gedrückt werden, wobei sich die Windungen teilweise axial übereinanderschieben, was eine radial nach innen und außen gerichtete Ausdehnung der Schraubenfeder und einen reibungskraftflüssigen Kontakt zwischen der Nabe und der Hülse bewirkt.

US 1,938,099 A beschreibt eine Spannfeder, die zwei koaxial zueinander angeordnete Schraubenfedern aufweist, eine innere und eine äußere Schraubenfeder. Die Windungen der inneren Feder haben im Querschnitt durch eine die Schraubenlängsachse enthaltende Ebene von der Mitte zu den Seiten radial abfallende Oberflächen. Die äußere Schraubenfeder hat Windungen, die im genannten Querschnitt an der Innenseite von der Mitte nach außen zu beiden Rändern hin sich radial aufweitend abgeschrägt sind. Die Abschrägungen der inneren und äußeren Schraubenfeder sind in Anlage aneinander und bewirken, dass bei Kompression der Federnanordnung die Abschrägungen übereinandergeschoben werden, was Kräfte in radialer Richtung nach innen und außen bewirkt.

US 2,709,607 A beschreibt eine Spannfedervorrichtung mit einer inneren und einer äußeren Schraubenfeder. Die Windungen der inneren und äußeren Schraubenfedern sind im Querschnitt durch eine die Schraubenfederlängsachsen enthaltende Ebene dreieckig, wobei die Spitzen der Dreiecke der inneren Schraubenfeder nach außen und die der äußeren Schraubenfeder nach innen gerichtet sind. Die Abschrägungen der im Querschnitt dreieckigen Windungen kommen bei axialer Kompression der Federnanordnung in Anlage aneinander, wobei eine weitere axiale Kompression zu Verschiebungen der Abschrägungen gegeneinander und damit zu einer radialen Ausdehnung der Federanordnung führt, bis benachbarte Windungen der inneren Feder mit ihren Ecken in Anlage aneinander kommen und entsprechend die Ecken benachbarter Windungen der äußeren Feder, wonach keine Kompressibilität mehr gegeben ist.

Es ist Aufgabe der vorliegenden Erfindung, eine Spannvorrichtung zum Festspannen einer zylindrischen Nabe auf einer zylindrischen Welle zu schaffen, die leicht lösbar ist und mit der ein fester Presssitz zur Übertragung von hohen Antriebs- und Bremsmomenten erzielbar ist.

Zur Lösung dieser Aufgabe dient die Spannvorrichtung mit den Merkmalen des Patentanspruchs 1. Vorteilhafte Ausführungsformen der Erfindung sind in den Unteransprüchen aufgeführt.

Die Spannvorrichtung weist zwei schraubenfederförmig gewundene Spannelemente auf. Die Windungen der Spannelemente weisen im Querschnitt durch eine die Schraubenlängsachse enthaltende Ebene keilförmige Abschrägungen auf, die so angeordnet sind, dass die keilförmige Abschrägung eines Spannelements auf diejenige des anderen Spannelements zu gerichtet ist und komplementär zu dieser ist, so dass sich die Abschrägungen bei Einwirkung einer zusammenschiebenden Kraft auf die Spannelemente in Schraubenlängsrichtung aufeinanderschieben, um eine radial nach innen und außen gerichtete Kraft zur Ausdehnung der Spannelemente zum reibungskraftschlüssigen Festspannen der Welle in der Nabe zu bewirken. Durch die Geometrie der Windungen zusammen mit der elastischen Rückstellwirkung der Federspannelemente lässt sich die Spannvorrichtung leicht lösen, indem die Kompression der Spannvorrichtung in Schraubenlängsachsenrichtung aufgehoben wird, wonach sich die Spannfederelemente wieder ausdehen und die Abschrägungen auseinandergleiten, so dass die festspannenden radialen Kräfte zwischen Welle und Nabe entfallen. Die Spannvorrichtung sitzt mit einem Ende an einer Schulter der Welle und wird vorzugsweise an ihrem gegenüberliegenden Ende von einem Einspannring bedeckt, der in axialer Richtung verstellbar und in gewünschter Position festsetzbar ist, um so die Spannfederelemente mit einer gewünschten Kompression in dem Zwischenraum zwischen Welle und Nabe festzusetzen.

Die gegeneinander gerichteten Abschrägungen der Spannfedern bewirken bei der Kompression der Spannvorrichtung eine Umrichtung einer auf die Spannvorrichtung ausgeübten Kraft in Schraubenlängsrichtung in Kräfte radial nach innen und nach außen, die zu einer reibungskraftschlüssigen Festsetzung der Welle in der Nabe führt, wobei diese nach innen und außen gerichtete Kraft sich auf die gesamte axiale Länge der Spannfedern verteilt, so dass eine großflächige Festspannung erreicht wird. Ferner können Antriebsmomente und Bremsmomente weiter zum Erhöhen des Presssitzes beitragen, indem sie die Spannfeder noch fest ineinander drehen.

Die Erfindung wird im Folgenden anhand eines Ausführungsbeispiels im Zusammenhang mit den Zeichnungen beschrieben, in denen:
Figur 1 eine seitliche Draufsicht von zwei schraubenfederförmigen Spannelementen zeigt,
Figur 2 eine Querschnittsansicht der Spannelemente zeigt, die entlang der durch die Pfeile B ib Figur 1 angedeuteten Ebene genommen ist,
Figur 3 eine Ausschnittsvergrößerung der Querschnittsansicht der Spannelemente aus Figur 2 zeigt,
Figur 4 eine schematische Gesamtansicht einer Welle-Nabe-Verbindung im Querschnitt zeigt, und
Figur 5 eine Ausschnittsvergrößerung der Querschnittsansicht aus Figur 4 zeigt.

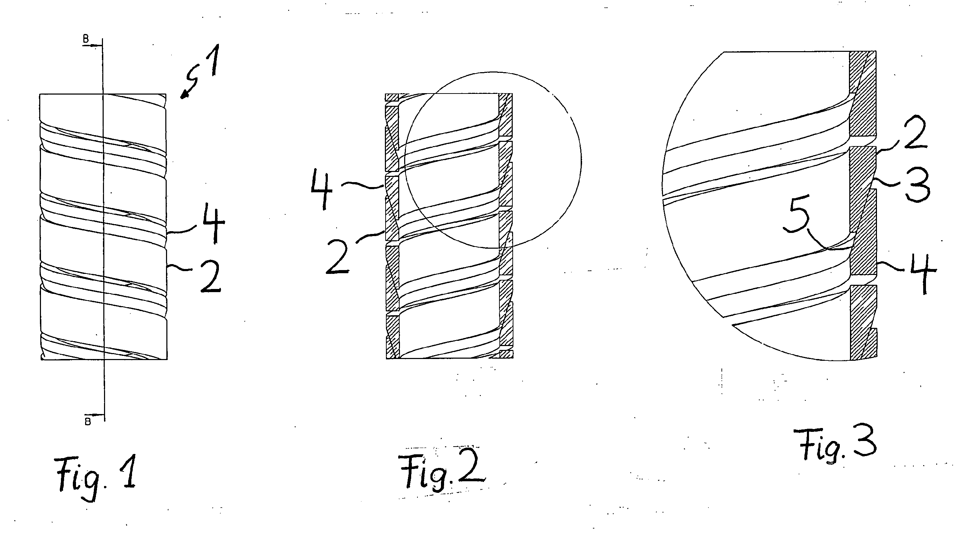

Figur 1 zeigt eine Draufsicht auf zwei ineinandergeschobene Schraubenfederspannelemente 2 und 4. Die Windungen der Federspannelemente bestehen aus bandförmigen Metallstreifen, die im Querschnitt durch eine die Schraubenlängsachse (Verbindungslinie zwischen den Pfeilen B) enthaltende Ebene auf in Bezug auf die Schraubengangrichtung gegenüberliegenden Seiten eine Abschrägung aufweisen, wobei die Abschrägungen aufeinander zu gewandt und komplementär zueinander geformt sind.

In der Darstellung von Figur 3 ist die Abschrägung 3 des Federspannelements 2 auf der unten liegenden Seite und von außen nach innen verlaufend gezeigt, während die Abschrägung 5 des Federspannelements 4 auf der oben liegenden Seite des Spannelements liegt und nach außen verläuft, so dass die Abschrägungen 3 und 5 sich keilartig übereinanderschieben können.

Aus der Darstellung von Figuren 2 und 3 ist ersichtlich, dass, wenn eine die schraubenförmigen Federspannelemente komprimierende Kraft in axialer Richtung ausgeübt wird, die Federspannelemente 2 und 4 zusammengedrückt (in axialer Richtung komprimiert) werden und die Abschrägungen 3 und 5 weiter übereinander geschoben werden, so dass resultierende Kräfte in radialer Richtung nach innen und außen erzeugt werden.

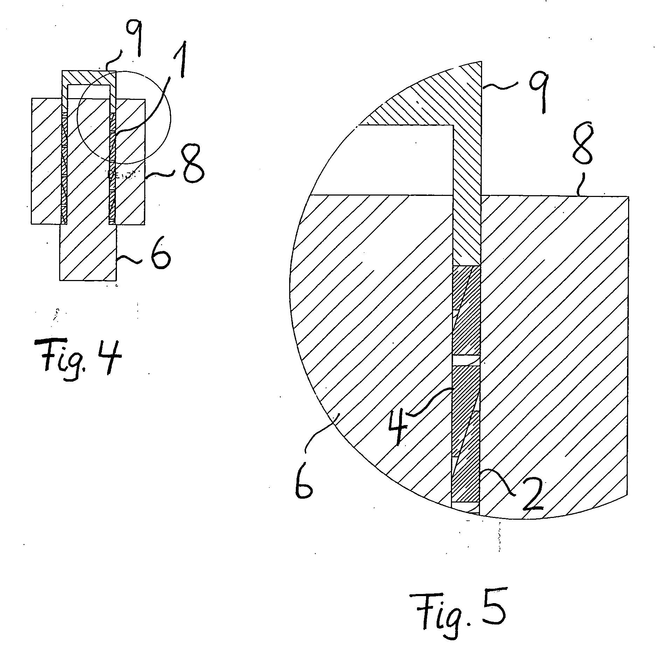

Aus der Übersichtsdarstellung in Figur 4 ist die Anordnung der Spannvorrichtung 1 im Zusammenhang mit einer Welle 6 und einer Nabe 8 ersichtlich. Die Spannvorrichtung 1 mit ihren zwei Federspannelementen 2 und 4 sitzt in dem zwischen der Welle 6 und der Nabe 8 vorgesehenen ringförmigen Freiraum. Unten sitzt die Spannvorrichtung 1 auf einer Schulter der Welle 6 auf, während von oben ein kappenförmiger Einspannring 9 in den ringförmigen Zwischenraum zwischen der Nabe und der Welle eingeführt ist, so dass er mit seinem unteren Rand oben auf der Spannvorrichtung 1 aufsitzt. Die Einspannring 9 kann durch nicht näher dargestellte Mechanismen in einer gewünschten axialen Position in Bezug auf die Spannvorrichtung 1 festgesetzt werden, so dass eine gewünschte Kompression der Spannvorrichtung 1 in axialer Richtung erzeugbar ist.

Wie aus Figur 5 ersichtlich ist, führt eine Absenkung des Einspannrings 9 dazu, dass die Spannfederelemente 2 und 4 zusammengedrückt und mit ihren Abschrägungen übereinander geschoben werden, woraus radial nach innen und außen gerichtete Kräfte entlang der ganzen Spannvorrichtung 1 erzeugt werden, die für eine reibungskraftschlüssige Festsetzung der Nabe 8 an der Welle 6 sorgen.

Die Federspannelemente 2 und 4 bestehen vorzugsweise aus Edelstahl. Eine plastische Deformierbarkeit ist, anders als bei den bekannten Spannhülsen, gerade nicht erwünscht. Vielmehr ist die elastisch federnde Wirkung im Zusammenhang mit der vorliegenden Erfindung von Vorteil.

## Patentansprüche

1. Spannvorrichtung zum lösbaren Festpannen einer zylindrischen Nabe auf einer zylindrischen Welle, insbesondere eines Zentrifugenrotors auf einer zylindrischen Welle, mit zwei schraubenfederförmig gewundenen Spannelementen (2, 4), wobei die Windungen eines Spannelements im Querschnitt durch eine die Schraubenlängsachse enthaltende Ebene mit Bezug auf die Schraubengangrichtung auf einer Seite mit einer keilförmigen (3) Abschrägung versehen sind und die Windungen des anderen Spannelements im genannten Querschnitt mit Bezug auf die Schraubengangrichtung auf der anderen Seite mit einer komplementären Abschrägung (5), die der Abschrägung (3) des ersten Spannelements (2) zugewandt ist, versehen sind, so dass sich die Abschrägungen (3, 5) bei Einwirkung einer zusammendrückenden Kraft auf die Spannelemente aufeinander schieben, um eine radial nach innen und außen gerichtete Ausdehnung der Spannelemente (2, 4) zum reibungskraftschlüssigen Festspannen der Welle (6) in der Nabe (8) zu bewirken.

2. Spannvorrichtung nach Anspruch 1, wobei das erste und zweite Spannelement aus Edelstahl bestehen.

3. Spannvorrichtung nach einem der vorhergehenden Ansprüche, wobei der Winkel der Abschrägungen (3, 5) der Spannelemente gegenüber der Längsachsenrichtung im Breich von 20° bis 50° liegt.
